# EUROPEAN PATENT APPLICATION

(11) **EP 2 660 729 A1**
(43) Date of publication of application: **06.11.2013**
(21) Application number: 11853163.1
(22) Date of filing: 29.12.2011
(51) Int. Cl.: G06F 17/30

(54) **DEVICE AND METHOD FOR STORING MASS DATA BASED ON TREE STRUCTURE**

(30) Priority: 31.12.2010 CN 201010621365
(71) Applicant: China Unionpay Co., Ltd, Pudong New District, Shanghai 200135 (CN)
(72) Inventor: TANG, Xudong, Shanghai 200135 (CN); FENG, Peng, Shanghai 200135 (CN)
(74) Representative: Wunderlich, Rainer
(86) International application number: PCT/CN2011/002209
(87) International publication number: WO 2012/088767

(57) **Abstract**

The present invention proposes a device and method of mass data storage based on tree structure, wherein the device of mass data storage based on tree structure includes an input/output module, a data creating module , a data query module , a data maintenance module, a memory and a main control module. The device and method of mass data storage based on tree structure disclosed in the present invention is easy to be extended, saving storage space, and can significantly improve the query efficiency.

## Description

### Technical Field

The present invention relates to the device and method of data storage, and more particularly, to the device and method of mass data storage based on tree structure.

### Background

Nowadays, with the increasingly growth of information data processing demands and increasingly enrichment of business types in different fields, the storage and query for mass data (e.g. the storage of BIN (Bank Identification Number, i.e. the card number) of the financial card) becomes more and more important.

Usually, in the existing device and method of mass data storage, containers (e.g. structure bodies) are employed to store various data, where each different data information is stored in different containers, and such containers store them in a sequential manner or a linked list manner. In such data storage structure, storage space occupied by each different data information can not be multiple-used. In addition, in the existing data storage structure, if the amount of data needed to be stored is n, then the time complexity of its query operation is about O (n), and even sometimes up to O (nlogn).

However, due to the increasingly enrichment of business types, data information needed to be stored is also more and more, while the data information format (e.g. structure, number of the bits, etc.) based specific application requirements varies more and more frequently, thereby it is often required that the storage format of the data information is adjusted dynamically.

Therefore, the existing technical solutions described above have the following problems: when in certain application fields (e.g. the storage of card number of the financial card), the amount of data to be stored grows significantly, the required storage space will increase in order of magnitude, thereby a large number of resources will be consumed; at the same time, in the case that the amount of data grows significantly, the time needed for the query increases, which will reduce the efficiency and performance of the whole application system; when the format of the data information need to be changed, in the existing approach, it is needed to adjust the infrastructure of the containers (for example, the definition of the structure bodies). This can lead to the result that the extension ability of the system is insufficient or the extension process is complicated.

Therefore, there exists the following requirement: providing a device and method of mass data storage based on tree structure, which is easy to extend, saving storage space, and can significantly improve the query efficiency.

### SUMMARY

In order to overcome the deficiency presented in the existing technical solution described above, the present invention proposes a device and method of mass data storage based on tree structure.

The aim of the present invention is realized through the following technical solutions:
A device of mass data storage based on tree structure, the device of mass data storage based on tree structure comprising:
   an input/output module for receiving request information from an application server and transmitting the request information to a main control module, as well as transmitting the resulting data or response information back to the application server;
   a data creating module for creating the tree structure according to an instruction and an initial data information from the main control module, and storing the created tree structure into a memory, as well as transmitting a pointer directing to the root node of the tree structure back to the main control module;
   a data query module for completing a specified query process according to the instruction and the data information from the main control module and based on a predetermined query rule for the tree structure, and transmitting the query results back to the main control module;
   a data maintenance module for completing the maintenance operations for the tree structure according to the instruction and the data information from the main control module, and transmitting the response information indicating the operation results back to the main control module;
   a memory for storing the tree structure;
   a main control module for receiving and analyzing the request information transmitted by the input/output module, constructing a packet including data information and instructions according to the analyzing result, transmitting the packet to a corresponding processing module, and transmitting the resulting data or response information returned by the processing module back to the input/output module.

In the solutions disclosed above, preferably, the data maintenance module further comprising:
a modifying unit for querying the tree structure according to the instruction and the data information from the main control module, and modifying the value of the corresponding matched node;
a deleting unit for querying the tree structure according to the instruction and the data information from the main control module, and changing the value of the flag bit of the last matched node when the matching operation is successful;
an adding unit for querying the tree structure according to the instruction and the data information from the main control module, and creating unmatched nodes.

In the solutions disclosed above, preferably, the request information includes data information and/or operation command information.

In the solutions disclosed above, preferably, the tree structure is a ten-forks tree.

In the solutions disclosed above, preferably, each parent node in the ten-forks tree includes a plurality of pointers, the plurality of pointers directing to its each child nodes respectively.

In the solutions disclosed above, preferably, each node in the ten-forks tree includes a data bit and a flag bit, wherein the data bit being used to store a bit of data corresponding to the data information, and the value of the flag bit being one of 0 and 1.

In the solutions disclosed above, preferably, the values of the data bit and the flag bit of the root node of the ten-forks tree are both set to zero.

In the solutions disclosed above, preferably, the value of the flag bit of the node corresponding the last data bit of the data information in the ten-forks tree is set to 1, and the values of flag bits of the remaining nodes in the ten-forks tree are set to 0.

In the solutions disclosed above, preferably, the level at which each node of the ten-forks tree resides in the tree structure corresponds to the order of each bit of the data information in the data information.

The aim of the present invention is also realized through the following technical solutions:
A method of mass data storage based on tree structure, the method of mass data storage based on tree structure comprising the following steps:
   (A1) receiving a data information and an initialization instruction from an application server;
   (A2) storing the data information according to the initialization instruction and based on the tree structure.

In the solutions disclosed above, preferably, the method further comprises:
(A3) receiving a query instruction and the data information to be queried from the application server, completing a specified query operation based on the query instruction and the data information to be queried as well as the predetermined query rule for the tree structure, and transmitting the query results back to the application server.

In the solutions disclosed above, preferably, the method further comprises:
(A4) receiving a maintenance instruction and the data information to be maintained from the application server, completing the maintenance operation for the tree structure based on the maintenance instruction and the data information to be maintained, and transmitting the response information indicating the operation results back to the application server.

In the solutions disclosed above, preferably, the step (A4) further comprises:
(B1) when the maintenance instruction is a modifying command, querying the tree structure according to the modifying command and the data information to be maintained, and modifying the value of the corresponding matched node;
(B2) when the maintenance instruction is a deleting command, querying the tree structure according to the deleting command and the data information to be maintained, and changing the value of the flag bit of the last matched node when the matching operation is successful;
(B3) when the maintenance instruction is an adding command, querying the tree structure according to the adding command and the data information to be maintained, and creating unmatched nodes.

In the solutions disclosed above, preferably, the tree structure is a ten-forks tree.

In the solutions disclosed above, preferably, each parent node in the ten-forks tree includes a plurality of pointers, the plurality of pointers directing to its each child nodes respectively.

In the solutions disclosed above, preferably, each node in the ten-forks tree includes a data bit and a flag bit, wherein the data bit being used to store a bit of data corresponding to the data information, and the value of the flag bit being one of 0 and 1.

In the solutions disclosed above, preferably, the values of the data bit and the flag bit of the root node of the ten-forks tree are both set to zero.

In the solutions disclosed above, preferably, the value of the flag bit of the node corresponding to the last data bit of the data information in the ten-forks tree is set to 1, and the values of the flag bits of the remaining nodes in the ten-forks tree are set to 0.

In the solutions disclosed above, preferably, the level at which each node of the ten-forks tree resides in the tree structure corresponds to the order of each bit of the data information in the data information.

The device and method of mass data storage based on tree structure disclosed in the present invention have the following advantages: being easy to be extended, saving storage space, and can significantly improve the query efficiency.

### BRIEF DESCRIPTION OF THE DRAWINGS

The technical features and advantages of the present invention will be better appreciated by one skilled in the art in conjunction with the accompanying drawings, in which:
FIG. 1 is the structure diagram of the device of mass data storage based on tree structure according to the embodiment of the present invention;
FIG. 2 is the schematic diagram of the ten-forks tree structure according to the embodiment of the present invention;
FIG. 3 is the flow diagram of the method of mass data storage based on tree structure according to the embodiment of the present invention.

### DETAILED DESCRIPTION

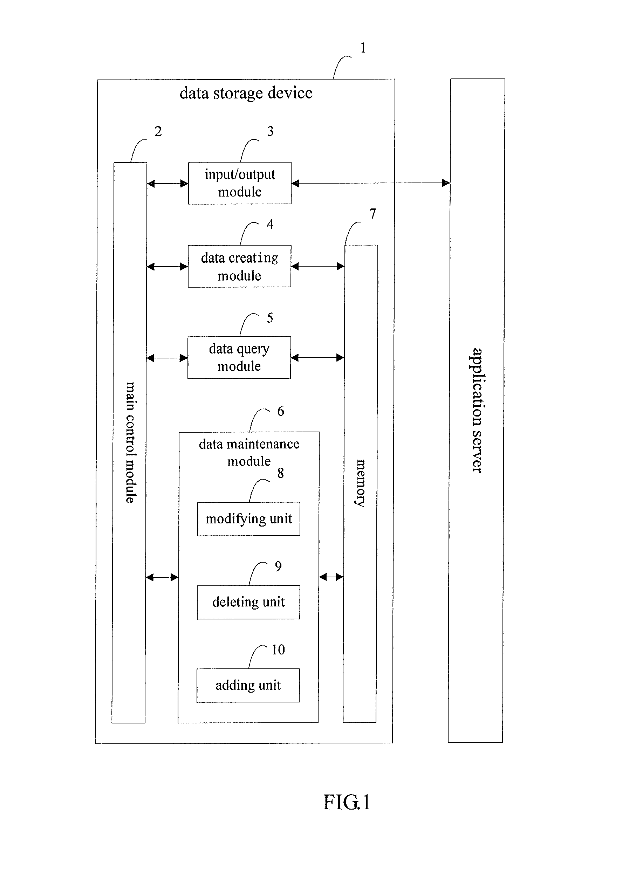

FIG. 1 is the structure diagram of the device of mass data storage based on tree structure according to the embodiment of the present invention. As shown in FIG. 1, the data storage device 1 disclosed in the present invention is used to store mass data based on a tree structure. As shown in FIG 1, the data storage device 1 includes a main control module 2, an input/output module 3, a data creating module 4, a data query module 5, a data maintenance module 6 and a memory 7. Among them, the input/output module 3 is used to receive request information from the application server and to transmit said request information to the main control module 2, as well as to transmit the resulting data or response information back to the application server. The data creating module 4 is used to create the tree structure according to an instruction and an initial data information from the main control module 2 and to store the created tree structure into the memory 7, as well as to transmit a pointer directing to the root node of the tree structure back to the main control module 2. The data query module 5 is used to complete a specified query process according to the instruction and the data information from the main control module 2 and based on a predetermined query rule for the tree structure, and to transmit the query results back to the main control module 2. The data maintenance module 6 is used to complete the maintenance operations for the tree structure according to the instruction and the data information from the main control module 2, and to transmit the response information indicating the operation results back to the main control module 2. The memory 7 is used to store the tree structure. The main control module 2 is used to receive and analyze the request information transmitted by the input/output module 3, to construct a packet including data information and instructions according to the analyzing result, to transmit the packet to the corresponding processing module, and to transmit the resulting data or response information returned by the processing module back to the input/output module 3.

As shown in FIG. 1, in the data storage device disclosed in the present invention, preferably, the data maintenance module 6 further includes a modifying unit 8, a deleting unit 9 and an adding unit 10. Among them, the modifying unit 8 is used to query the tree structure according to the instruction and the data information from the main control module 2, and to modify the value of the corresponding matched node. The deleting unit 9 is used to query the tree structure according to the instruction and the data information from the main control module 2, and to change the value of the flag bit of the last matched node when the matching operation is successful. The adding unit 10 is used to query the tree structure according to the instruction and the data information from the main control module 2, and to create unmatched nodes.

Preferably, in the data storage device disclosed in the present invention, the request information includes data information and/or operation command information.

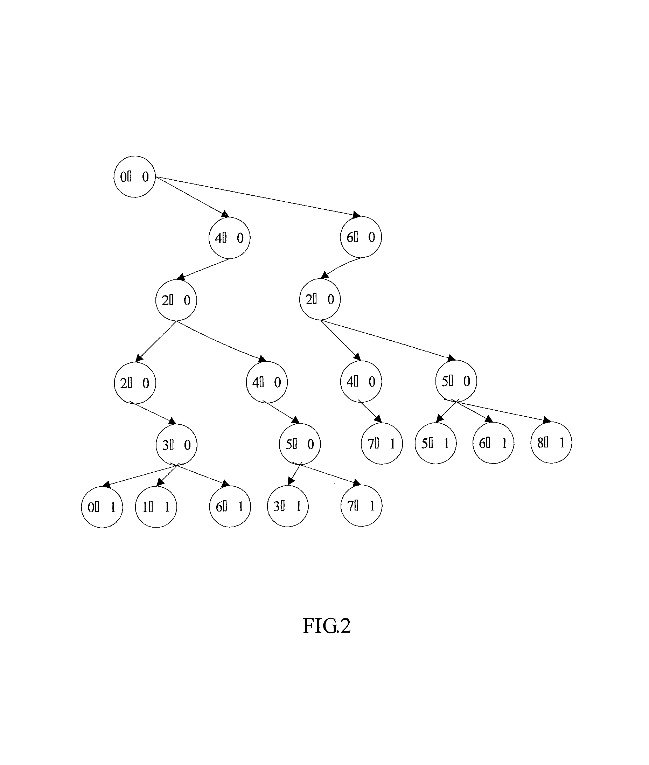

FIG. 2 is the schematic diagram of the ten-forks tree structure according to the embodiment of the present invention. As shown in FIG. 2, preferably, in the data storage device disclosed in the present invention, the tree structure is the ten-forks tree (i.e., each parent node in said tree has at most 10 child nodes). Because the data information needed to be stored (e.g. card number) is a digit set, and each digit is one of 0-9, and thus the tree structure is selected as the ten-forks tree.

As shown in FIG. 2, preferably, in the data storage device disclosed in the present invention, each parent node in the ten-forks tree includes a plurality of pointers, the plurality of pointers directing to its each child nodes respectively.

As shown in FIG. 2, preferably, in the data storage device disclosed in the present invention, each node in the ten-forks tree includes a data bit and a flag bit, wherein the data bit being used to store a bit of data corresponding to the data information (e.g. card number), and the value of the flag bit being one of 0 and 1.

As shown in FIG. 2, preferably, in the data storage device disclosed in the present invention, the root node of the ten-forks tree is set to (0, 0) (i.e., the values of the data bit and the flag bit of the root node are both set to zero).

As shown in FIG. 2, preferably, in the data storage device disclosed in the present invention, the value of the flag bit of the node corresponding to the last data bit of the data information in the ten-forks tree is set to 1, and the values of flag bits of the remaining nodes in the ten-forks tree are set to 0.

Preferably, in the data storage device disclosed in the present invention, the nodes at each level of said ten-forks tree corresponds to each bit of the data information, namely, the level at which each node resides in the tree structure corresponds to the order of each bit of the data information in the data information (e.g. the child nodes at level 1 corresponds to the first bit data of the data information).

Preferably, the predetermined query rule is a query algorithm of the combined tree, which is upward from the root, thereby the traversal of the tree structure can be completed based on data matching. It should be understood by one skilled in the art that any other query algorithm which is capable of completing the same function can be used.

As shown in FIGs. 1 and 2, exemplarily, the creation process of the tree structure of the data storage device disclosed in the present invention is as follows: creating a root node (the root node is set to (0, 0)); starting from the root node, traversing the tree structure for each bit data in each data information (for example each card number); if there existing a matched node for a certain bit data, then continuing to traverse downward; if there not existing a matched node for a certain bit data, then creating a node corresponding to that bit data based on the structure of the tree; and doing so by analogy until the node corresponding to the last bit of each of the data information has been created. Figure 2 schematically shows the ten-forks tree structure built according to data information set [42230, 42231, 42236, 42453, 42457, 6247, 6255, 6256, 6258] (i.e., including the above nine data information). It can be known from the foregoing that, in the data storage device disclosed in the present invention, each data information is stored in the manner of the tree structure on the basis of bit, namely, the majority of the same number in different data information (for example, card number) occupy the same space, thereby the storage space can be saved significantly.

As shown in FIGs. 1 and 2, exemplarily, the query process of the tree structure of the data storage device disclosed in the present invention is as follows: starting from the root node, traversing the tree structure for each bit data in each data information to be queried (for example, each card number) (i.e., matching the nodes in the tree in sequence); if there existing matched node which corresponds to the last digit of each of the data information and the value of flag bit of the node is 1, then the query operation succeeds; otherwise, the query operation fails. It can be known from the foregoing that, in the data storage device disclosed in the present invention, the query efficiency of the ten-forks tree is unrelated to base number N (i.e., the total amount of data information), but is related to the length of the data information, namely, if the length of the data information is M, then the comparison operations only being performed M times at most, despite of the size of the total amount of the data information, therefore, the performance and efficiency of the whole system can be improved significantly.

As shown in FIGs. 1 and 2, exemplarily, the adding process of the tree structure of the data storage device disclosed in the present invention is as follows: starting from the root node, traversing the tree structure for each bit data in each data information to be added (for example, each card number) (i.e., matching the nodes in the tree in sequence); if there existing a matched node for a certain bit data, then continuing to traverse downward; if there not existing a matched node for a certain bit data, then creating a node corresponding to that bit data based on the structure of the tree; and doing so by analogy until all nodes corresponding to the last digit of each of the data information has been created.

As shown in FIGs. 1 and 2, exemplarily, the deleting process of the tree structure of the data storage device disclosed in the present invention is as follows: starting from the root node, traversing the tree structure for each bit data in each data information to be deleted (for example, each card number) (i.e., matching the nodes in the tree in sequence); if there existing a matched node for a certain bit data, then continuing to traverse downward; if there not existing a matched node for a certain bit data, then exiting; and if there existing the matched node corresponding to the last digit of each of the data information, then setting the value of the flag bit of that node to 0.

As shown in FIGs. 1 and 2, exemplarily, when the value of the digit of the existing data information need to be modified, the modifying process of the tree structure of the data storage device disclosed in the present invention is as follows: starting from the root node, traversing the tree structure for each bit data in each data information to be modified (for example, each card number) (i.e., matching the nodes in the tree in sequence); if there existing a matched node for a certain bit data, then setting the data bit of the node to a new value and continuing to traverse downward; and doing so by analogy until all of the data bits of the nodes which need to be modified have been set to the new values, wherein the corresponding relations between the old data information and the new data information (i.e., the old data information is modified as the corresponding new data information) is included in the request information.

As shown in FIGs. 1 and 2, exemplarily, when the length of the existing data information need to be changed, the modifying process of the tree structure of the data storage device disclosed in the present invention is as follows: (1) when the length of the data information reduces, the modifying process being as follows: starting from the root node, traversing the tree structure for each bit data in each new shortened data information (for example, a shorter card number) (i.e., matching the nodes in the tree in sequence); if there existing a matched node for a certain bit data, then continuing to traverse downward; if there not existing a matched node for a certain bit data, then exiting; and if there existing matched node corresponding to the last digit of each of the new data information, then setting the value of the flag bit of that node to 1; (2) when the length of the data information lengthens, the modifying process being as follows: starting from the root node, traversing the tree structure for each bit data in each new lengthened data information (for example, a longer card number) (i.e., matching the nodes in the tree in sequence); if there existing a matched node for a certain bit data, then continuing to traverse downward; if there not existing a matched node for a certain bit data, then creating a node corresponding to that bit data based on the structure of the tree; and doing so by analogy until all of the nodes corresponding to the last digit of each of the new data information has been created.

It can be known from the foregoing that, in the data storage device disclosed in the present invention, each data information is stored in the manner of the tree structure on the basis of bit, therefore, when it is needed to perform the adding, deleting and modifying operations to the data information (for example, a card number), it only needs to perform the operation to the corresponding node, rather than changing the basic data structure, such that the system is easy to be extended.

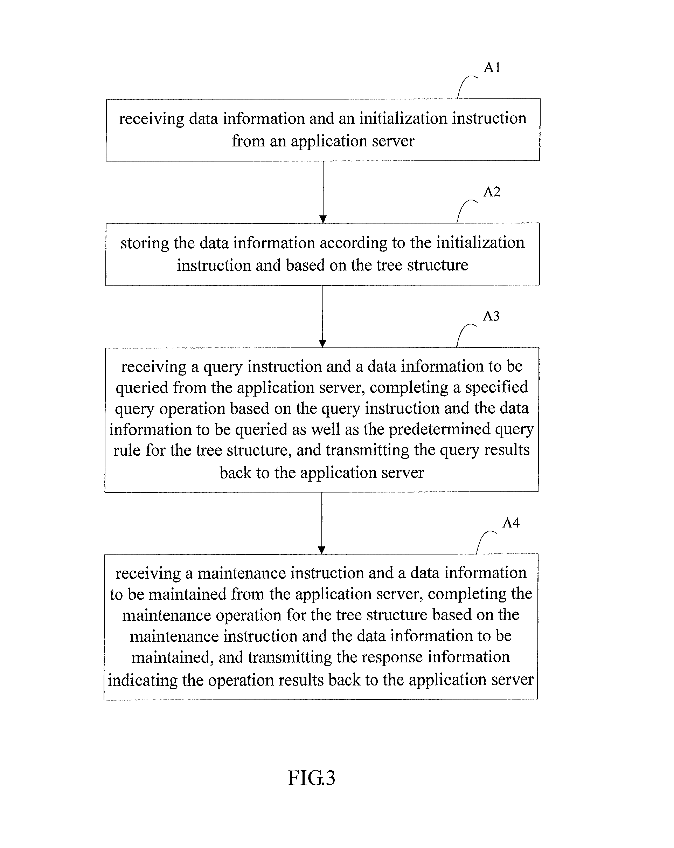

FIG. 3 is the flow diagram of the method of mass data storage based on tree structure according to the embodiment of the present invention. As shown in FIG. 3, the method of mass data storage based on tree structure disclosed in the present invention comprises the following steps: (A1) receiving a data information and an initialization instruction from an application server; (A2) storing the data information according to the initialization instruction and based on the tree structure.

As shown in FIG. 3, the method of mass data storage based on tree structure disclosed in the present invention further comprises: (A3) receiving a query instruction and a data information to be queried from the application server, completing a specified query operation based on the query instruction and the data information to be queried as well as a predetermined query rule for the tree structure, and transmitting the query results back to the application server.

As shown in FIG. 3, the method of mass data storage based on tree structure disclosed in the present invention further comprises: (A4) receiving a maintenance instruction and a data information to be maintained from the application server, completing the maintenance operation for the tree structure based on the maintenance instruction and the data information to be maintained, and transmitting the response information indicating the operation results back to the application server.

As shown in FIG. 3, in the method of mass data storage based on tree structure disclosed in the present invention, the step (A4) further comprises: (B1) when the maintenance instruction is a modifying command, querying the tree structure according to the modifying command and the data information to be maintained, and modifying the value of the corresponding matched node; (B2) when the maintenance instruction is a deleting command, querying the tree structure according to the deleting command and the data information to be maintained, and changing the value of the flag bit of the last matched node when the matching operation is successful; and (B3) when the maintenance instruction is an adding command, querying the tree structure according to the adding command and the data information to be maintained, and creating unmatched nodes.

Preferably, in the method of data storage disclosed in the present invention, the tree structure is a ten-forks tree (i.e., each parent node in the tree has at most 10 child nodes). Because the data information needed to be stored (e.g. card number) is a digit set, and each digit is one of 0-9, the tree structure is selected as the ten-forks tree.

Preferably, in the method of data storage disclosed in the present invention, each parent node in the ten-forks tree includes a plurality of pointers, the plurality of pointers directing to its each child nodes respectively.

Preferably, in the method of data storage disclosed in the present invention, each node in the ten-forks tree includes a data bit and a flag bit, wherein the data bit being used to store a bit of data corresponding to the data information (e.g. card number), and the value of the flag bit being one of 0 and 1.

Preferably, in the method of data storage disclosed in the present invention, the root node of the ten-forks tree is set to (0, 0) (i.e., the values of the data bit and the flag bit of the root node are both set to zero).

Preferably, in the method of data storage disclosed in the present invention, the value of the flag bit of the node corresponding to the last data bit of the data information in the ten-forks tree is set to 1, and the values of the flag bits of the remaining nodes in the ten-forks tree are set to 0.

Preferably, in the method of data storage disclosed in the present invention, the nodes at each level of said ten-forks tree corresponds to each bit of the data information, namely, the level at which each node resides in the tree structure corresponds to the order of each bit of the data information in the data information (e.g. the child nodes at level 1 corresponds to the first bit data of the data information).

Preferably, the predetermined query rule is a query algorithm of combined tree, which is upward from the root, thereby the traversal of the tree structure can be completed based on data matching. It should be understood by one skilled in the art that any other query algorithm which is capable of completing the same function can be used.

Exemplarily, in the method of data storage disclosed in the present invention, the creation process of the tree structure is as follows: creating a root node (the root node is set to (0, 0)); starting from the root node, traversing the tree structure for each bit data in each data information (for example, each card number); if there existing a matched node for a certain bit data, then continuing to traverse downward; if there not existing a matched node for a certain bit data, then creating a node corresponding to that bit data based on the structure of the tree; and doing so by analogy until all of the nodes corresponding to the last bit of each of the data information has been created. It can be known from the foregoing that, in the method of data storage disclosed in the present invention, each data information is stored in manner of the tree structure on the basis of bit, namely, the majority of the same digits in different data information (for example, the card number) occupy the same space, thereby the storage space can be saved significantly.

Exemplarily, in the method of data storage disclosed in the present invention, the query process of the tree structure is as follows: starting from the root node, traversing the tree structure for each bit data in each data information to be queried (for example, each card number) (i.e., matching the nodes in the tree in sequence); if there existing the matched node corresponding to the last digit of the data information and the value of the flag bit of the node is 1, then the query operation succeeds; otherwise, the query operation fails. It can be known from the foregoing that, in the method of data storage disclosed in the present invention, the query efficiency of the ten-forks tree is unrelated to the base number N (i.e., the total amount of data information), but is related to the length of the data information, namely, if the length of the data information is M, then the comparison operations only being performed M times at most, despite of the size of the total amount of the data information, thereby the performance and efficiency of the whole system can be improved significantly.

Exemplarily, in the method of data storage disclosed in the present invention, the adding process of the tree structure is as follows: starting from the root node, traversing the tree structure for each bit data in each data information to be added (for example, each card number) (i.e., matching the nodes in the tree in sequence); if there existing a matched node for a certain bit data, then continuing to traverse downward; if there not existing a matched node for a certain bit data, then creating a node corresponding to that bit data based on the structure of the tree; and doing so by analogy until all of the nodes corresponding to the last digit of each of the data information have been created.

Exemplarily, in the method of data storage disclosed in the present invention, the deleting process of the tree structure is as follows: starting from the root node, traversing the tree structure for each bit data in each data information to be deleted (for example, each card number) (i.e., matching the nodes in the tree in sequence); if there existing a matched node for a certain bit data, then continuing to traverse downward; if there not existing a matched node for a certain bit data, then exiting; and if there existing the matched node corresponding to the last digit of each of the data information, then setting the value of the flag bit of that node to 0.

Exemplarily, when the value of the digit of the existing data information needs to be changed, in the method of data storage disclosed in the present invention, the modifying process of the tree structure is as follows: starting from the root node, traversing the tree structure for each bit data in each data information to be modified (for example, each card number) (i.e., matching the nodes in the tree in sequence); if there existing a matched node for a certain bit data, then setting the data bit of the node to a new value and continuing to traverse downward; and doing so by analogy until all of the data bits of the nodes which need to be modified have been set to the new values, wherein the corresponding relations between the old data information and new data information (i.e., the old data information is modified as the corresponding new data information) is included in the request information.

Exemplarily, when the length of the existing data information need to be changed, in the method of data storage disclosed in the present invention, the modifying process of the tree structure is as follows: (1) when the length of the data information reduces, the modifying process being as follows: starting from the root node, traversing the tree structure for each bit data in each new shortened data information (for example, a shorter card number) (i.e., matching the nodes in the tree in sequence); if there existing a matched node for a certain bit data, then continuing to traverse downward; if there not existing a matched node for a certain bit data, then exiting; and if there existing the matched node corresponding to the last digit of each of the new data information, then setting the value of the flag bit of that node to 1; (2) when the length of the data information lengthens, the modifying process being as follows: starting from the root node, traversing the tree structure for each bit data in each new lengthened data information (for example, a longer card number) (i.e., matching the nodes in the tree in sequence); if there existing a matched node for a certain bit data, then continuing to traverse downward; if there not existing a matched node for a certain bit data, then creating a node corresponding to that bit data based on the structure of the tree; and doing so by analogy until all of the nodes corresponding to the last digit of each of the new data information have been created.

It can be known from the foregoing that, in the method of data storage disclosed in the present invention, each data information is stored in manner of the tree structure on the basis of bit, therefore, when it is needed to perform the adding, deleting and modifying operations to the data information (for example, the card number), it only needs to perform the operation to the corresponding nodes, rather than changing the basic data structure, such that the system is easy to be extended.

Although the present invention is described by way of the preferred implementation described above, but its realization form is not limited to the above implementation. It should be recognized that various changes and modifications can be made to the present invention by one skilled in the art without departing from the spirit and scope of the invention.

## Claims

1. A device of mass data storage based on tree structure, the device of mass data storage based on tree structure comprising:
an input/output module for receiving request information from an application server and transmitting the request information to a main control module, as well as transmitting the resulting data or response information back to the application server;
a data creating module for creating the tree structure according to an instruction and an initial data information from the main control module and storing the created tree structure into a memory , as well as transmitting a pointer directing to the root node of the tree structure back to the main control module;
a data query module for completing a specified query process according to the instruction and the data information from the main control module and based on a predetermined query rule for the tree structure, and transmitting the query results back to the main control module;
a data maintenance module for completing the maintenance operations for the tree structure according to the instruction and the data information from the main control module, and transmitting the response information indicating the operation results back to the main control module;
a memory for storing the tree structure;
a main control module for receiving and analyzing the request information transmitted by the input/output module, constructing a packet including data information and instructions according to the analyzing result, transmitting the packet to a corresponding processing module, and transmitting the resulting data or response information returned by the processing module back to the input/output module.

2. The device of mass data storage based on tree structure of claim 1, **characterized in that**, the data maintenance module further comprising:
a modifying unit for querying the tree structure according to the instruction and the data information from the main control module, and modifying the value of the corresponding matched nodes;
a deleting unit for querying the tree structure according to the instruction and the data information from the main control module, and changing the value of the flag bit of the last matched node when the matching operation is successful;
an adding unit for querying the tree structure according to the instruction and the data information from the main control module, and creating unmatched nodes.

3. The device of mass data storage based on tree structure of claim 2, **characterized in that**, the request information includes data information and/or operation command information.

4. The device of mass data storage based on tree structure of claim 3, **characterized in that**, the tree structure is a ten-forks tree.

5. The device of mass data storage based on tree structure of claim 4, **characterized in that**, each parent node in the ten-forks tree includes a plurality of pointers, the plurality of pointers directing to its each child nodes respectively.

6. The device of mass data storage based on tree structure of claim 5, **characterized in that**, each node in the ten-forks tree includes a data bit and a flag bit, wherein the data bit being used to store a bit of data corresponding to the data information, and the value of the flag bit being one of 0 and 1.

7. The device of mass data storage based on tree structure of claim 6, **characterized in that**, the values of the data bit and the flag bit of the root node of the ten-forks tree are both set to zero.

8. The device of mass data storage based on tree structure of claim 7, **characterized in that**, the value of the flag bit of the node corresponding the last data bit of the data information in the ten-forks tree is set to 1, and the values of the flag bits of the remaining nodes in the ten-forks tree are set to 0.

9. The device of mass data storage based on tree structure of claim 8, **characterized in that**, the level at which each node of the ten-forks tree resides in the tree structure corresponds to the order of each bit of the data information in the data information.

10. A method of mass data storage based on tree structure, the method of mass data storage based on tree structure comprising the following steps:
(A1) receiving a data information and an initialization instruction from an application server;
(A2) storing the data information according to the initialization instruction and based on the tree structure.

11. The method of mass data storage based on tree structure of claim 10, **characterized in that**, the method further comprises:
(A3) receiving a query instruction and the data information to be queried from the application server, completing a specified query operation based on the query instruction and the data information to be queried as well as the predetermined query rule for the tree structure, and transmitting the query results back to the application server.

12. The method of mass data storage based on tree structure of claim 11, **characterized in that**, the method further comprises:
(A4) receiving a maintenance instruction and the data information to be maintained from the application server, completing the maintenance operation for the tree structure based on the maintenance instruction and the data information to be maintained, and transmitting the response information indicating the operation results back to the application server.

13. The method of mass data storage based on tree structure of claim 12, **characterized in that**, the step (A4) further comprises:
(B1) when the maintenance instruction is a modifying command, querying the tree structure according to the modifying command and the data information to be maintained, and modifying the value of the corresponding matched node;
(B2) when the maintenance instruction is a deleting command, querying the tree structure according to the deleting command and the data information to be maintained, and changing the value of the flag bit of the last matched node when the matching operation is successful;
(B3) when the maintenance instruction is an adding command, querying the tree structure according to the adding command and the data information to be maintained, and creating unmatched nodes.

14. The method of mass data storage based on tree structure of claim 13, **characterized in that**, the tree structure is a ten-forks tree.

15. The method of mass data storage based on tree structure of claim 14, **characterized in that**, each parent node in the ten-forks tree includes a plurality of pointers, the plurality of pointers directing to its each child nodes respectively.

16. The method of mass data storage based on tree structure of claim 15, **characterized in that**, each node in the ten-forks tree includes a data bit and a flag bit, wherein the data bit being used to store a bit of data corresponding to the data information, and the value of the flag bit being one of 0 and 1.

17. The method of mass data storage based on tree structure of claim 16, **characterized in that**, the values of the data bit and the flag bit of the root node of the ten-forks tree are both set to zero.

18. The method of mass data storage based on tree structure of claim 17, **characterized in that**, the value of the flag bit of the node corresponding the last data bit of the data information in the ten-forks tree is set to 1, and the values of the flag bits of the remaining nodes in the ten-forks tree are set to 0.

19. The method of mass data storage based on tree structure of claim 18, **characterized in that**, the level at which each node of the ten-forks tree resides in the tree structure corresponds to the order of each bit of the data information in the data information.
